# EUROPÄISCHE PATENTSCHRIFT

(11) **EP 3 239 586 B1**
(45) Veröffentlichungstag und Bekanntmachung des Hinweises auf die Patenterteilung: **28.08.2019**
(21) Anmeldenummer: 17000616.7
(22) Anmeldetag: 11.04.2017
(51) Int. Cl.: F16L 59/16, F16L 59/18

(54) **HALTEVORRICHTUNG ZUM BEFESTIGEN EINER ISOLIERUNG**
SUPPORTING DEVICE FOR FASTENING AN ISOLATION
DISPOSITIF DE RETENUE DESTINÉ À FIXER UN ISOLANT

(30) Priorität: 25.04.2016 DE 102016107637; 10.05.2016 DE 202016002955 U; 10.05.2016 DE 202016002956 U
(43) Veröffentlichungstag der Anmeldung: 01.11.2017
(60) Teilanmeldung: 19184309.3
(73) Patentinhaber: BDD Beteiligungs GmbH, 68169 Mannheim (DE)
(72) Erfinder: GUGAU, Bernd, 69121 Heidelberg (DE); CAPPELLUCCI, Peter, 68199 Mannheim (DE)
(74) Vertreter: Wesch, Arno

(56) Entgegenhaltungen:
- EP-A1- 2 148 124
- GB-A- 616 170
- JP-U- S6 038 992
- US-A- 4 520 695
- US-A1- 2007 209 166

## Beschreibung

Die Erfindung betrifft eine Haltevorrichtung zum Befestigen einer Isolierung an einer V-Band-Schelle oder an einer anderen Verbindungsvorrichtung für zu verbindende Rohrenden gemäß dem Oberbegriff des Patentanspruchs 1 und ein Verfahren zum Befestigen dieser Haltevorrichtung.

Aus der EP 2 148 124 A1 ist eine solche Haltevorrichtung mit einem sehr kurzen Zugkörper, nämlich lediglich einer Lasche, bekannt, die umgebogen werden kann, um zwei Enden eines Gürtelabschnitts zu verbinden.

Aus dem Stand der Technik ist es insoweit bereits bekannt, zwei Rohrenden einer Rohrleitung durch sogenannte V-Band-Schellen zu verbinden. Eine V-Band-Schelle weist eine V-förmige oder im Wesentlichen V-förmige längliche Aufnahme auf. Die Aufnahme wird derart gebogen, dass sie axial einander gegenüberliegende ringförmige Vorsprünge der Rohrenden umfängt und umgreift. Durch Anziehen einer Schraube wird der Umfang der V-Band-Schelle solange verringert, bis diese bzw. die längliche Aufnahme fest an den Rohrenden anliegt. Hierdurch werden die Rohrenden mechanisch, vorzugsweise fluiddicht, miteinander verbunden. Durch eine so geschaffene Rohrleitung können dann insbesondere heiße Gase oder Flüssigkeiten geführt werden.

Bei der Führung von heißen Medien durch die Rohrleitung wird die V-Band-Schelle allerdings erwärmt und kann daher in unerwünschter Weise Wärme auf umliegende Bauteile abstrahlen. Insbesondere wenn die V-Band-Schelle in der Nähe von temperaturempfindlichen Bauteilen, beispielsweise nahe bei Kunststoffbauteilen, elektronischen Reglern oder Sensoren, angeordnet ist, können diese Bauteile durch die Wärme negativ beeinträchtigt werden.

Außerdem kann es wünschenswert sein, den Verlust von Wärme zu minimieren, um den Energieerhalt in einem fluidführenden System zu optimieren, Um diesen Problemen zu begegnen, müssen V-Band-Schellen häufig mit geeigneten Isolierungen versehen werden. Solche Isolierungen bestehen in der Regel aus Isoliermatten oder aus konfektionierten flexiblen Isolierformteilen. Die Isolierungen weisen temperaturbeständige technische Gewebe und Isoliermaterialien auf oder temperaturbeständige Gewebebänder, die zur Bandagierung und Umwicklung verwendet werden.

Manche Isolierungen werden um einen zu isolierenden Körper gelegt und mit Druckknöpfen befestigt. Andere Isolierungen werden mit Haken und Spannfedern befestigt, die in die Isolierungen eingehängt sind. Diese Isolierungen sind jedoch weder steinschlagfest noch spritzwasserbeständig. Des Weiteren zeigen sie bei Ihrer Verwendung unter dynamischer Belastung nur eine geringe Vibrationsbeständigkeit und sind daher nur von geringer Dauerhaltbarkeit.

Vor diesem Hintergrund sind aus dem Brandschutz bereits Haltevorrichtungen für intumeszierende Materialien bekannt. Die DE 43 25 757 A1 zeigt eine Haltevorrichtung mit einer Schraubverbindung. Die EP 0 486 299 A1 zeigt eine Haltevorrichtung, bei welcher zur Befestigung metallische Finger umgebogen werden, nachdem diese durch Schlitze als Zugkörper durchgezogen wurden. Die aus dem Brandschutz bekannten Haltevorrichtungen sind für statische Anwendungen ausgelegt und nicht geeignet, Isolierungen an V-Band-Schellen betriebstauglich festzulegen.

Der Erfindung liegt daher die Aufgabe zugrunde, eine V-Band-Schelle oder eine andere Verbindungsvorrichtung für zu verbindende Rohrenden mit einer Isolierung zu versehen, welche nach einfacher Montage eine möglichst lange Betriebslebenszeit zeigt.

Die vorliegende Erfindung löst die Aufgabe durch die Merkmale des Patentanspruchs 1.

Erfindungsgemäß umfasst eine Haltevorrichtung zum Befestigen einer Isolierung an einer V-Band-Schelle oder an einer anderen Verbindungsvorrichtung für zu verbindende Rohrenden Verschlusselemente, wobei durch Zusammenwirken der Verschlusselemente der Außen- und/ oder Innenumfang der Haltevorrichtung verringerbar ist, und einen biegbaren Gürtelabschnitt, wobei der Gürtelabschnitt als Teil eines Außenmantels oder nach Art eines Außenmantels um eine Isolierung legbar ist. Zur Verbesserung der Dauerhaltbarkeit, der Steinschlagfestigkeit, Spritzwasserdichtigkeit, Vibrationsbeständigkeit und der Montage von Isolierungen für V-Band-Schellen wird hierdurch eine flexible Haltevorrichtung angegeben, welche den eigentlichen Isolierwerkstoff vor den genannten Umwelteinflüssen schützt und ohne großen technischen Aufwand montierbar ist. Die Isolierung umgibt die V-Band-Schelle an deren äußerem Umfang und wird durch die Haltevorrichtung gehalten. Der Gürtelabschnitt schützt die Isolierung vor äußeren Einflüssen und umfängt die Isolierung zumindest bereichsweise oder vollständig. Die Haltevorrichtung schützt so nach Art eines Außenmantels zumindest bereichsweise gegen äußere Einwirkungen, zum Beispiel gegen Steinschlag, Spritzwasser und ähnliches. Die Haltevorrichtung ermöglicht eine dauerhafte vibrationsgerechte Befestigung eines Isoliersystems auf der V-Band-Schelle.

Der Gürtelabschnitt könnte mittelbar oder unmittelbar mit einer Haube zur Aufnahme eines Überstands oder Verschlusses einer V-Band-Schelle oder einer anderen Verbindungsvorrichtung für Rohrenden verbunden und/oder verbindbar sein. Die Haube stellt sicher, dass ein Verschluss, nämlich in der Regel eine Schraubverbindung der V-Band-Schelle, innerhalb der Haube aufnehmbar ist, wenn die Haltevorrichtung um die V-Band-Schelle nebst Isolierung gelegt wird. Die Isolierung kann vorteilhaft in die Haube ausweichen, wenn diese durch einen Überstand oder Verschluss verdrängt wird. Durch die Haube wird weitgehend oder vollständig vermieden, dass die Haltevorrichtung in unerwünschter Weise deformiert wird und an kritischen Bereichen von einer runden Form abweicht.

Die Haube bietet des Weiteren ebenfalls Schutz vor äußeren Einflüssen. Vor diesem Hintergrund könnten der Gürtelabschnitt und die Haube einen zumindest bereichsweise geschlossenen Außenmantel zum Umfangen der Isolierung und/ oder der V-Band-Schelle in radialer und/oder axialer Richtung bilden. Hierdurch werden die Isolierung und die V-Band-Schelle besonders gut gegen äußere Einflüsse geschützt.

Die Haltevorrichtung kann, wie eine V-Band-Schelle, durch eine Schraubverbindung dauerhaft befestigt werden. Durch das Anziehen einer Schraube wird der Außen- und Innenumfang der Haltevorrichtung verringert, so dass diese die Isolierung an die V-Band-Schelle in radialer Richtung andrückt. Bei dieser Montage ist allerdings zu beachten, dass die Isolierung betriebsgerecht zwischen V-Band-Schelle und Haltevorrichtung positioniert werden muss. Zugleich muss von der montierenden Person eine Schraubverbindung hergestellt und eine Schraube angezogen werden.

Eine Schraubverbindung stellt zwar eine feste Verbindung her, erfordert aber das Vorhalten von unterschiedlich langen Schrauben, die nach der Montage gegebenenfalls in unerwünschter Weise von der Haltevorrichtung abragen können. Vor diesem Hintergrund sind die beiden Verschlusselemente miteinander verbindbar oder verbunden, wobei das erste Verschlusselement einen Zugkörper aufweist oder als solcher ausgebildet ist, wobei das zweite Verschlusselement eine Ausnehmung aufweist, durch welche der Zugkörper zur Verringerung des Außen- und/ oder Innenumfangs der Haltevorrichtung durchziehbar oder durchgezogen ist, und wobei der Zugkörper aufwickelbar oder aufgewickelt ist und beim Aufwickeln oder im aufgewickelten Zustand an einem Widerlager anliegt. Hierdurch ist eine Haltevorrichtung angegeben, welche den Montageprozess erheblich vereinfacht und bei dem gleichzeitig auf den Einsatz von zusätzlichen Befestigungselementen wie Schraubenaufnahmen, Schrauben und Schrauben-Gegenaufnahmen verzichtet werden kann.

Die Haltevorrichtung kann zum Befestigen einer Isolierung aufgrund eines Aufwickelprozesses ohne Verwendung von Schrauben festgelegt werden. Dabei umgibt der biegbare Gürtelabschnitt zumindest bereichsweise eine V-Band-Schelle und stellt eine Aufnahme oder Anlage für die Isolierung bereit, welche zwischen der V-Band-Schelle und der Haltevorrichtung angeordnet ist.

Sobald die Verschlusselemente miteinander verbunden sind, ist die Haltevorrichtung ringförmig ausgebildet und zumindest zunächst provisorisch geschlossen. Das provisorische Schließen kann bereits dadurch erfolgen, dass ein Zugkörper des ersten Verschlusselements durch eine Ausnehmung des zweiten Verschlusselements gezogen und bevorzugt leicht umgebogen wird.

Weiter ist der Außen- und/ oder der Innenumfang der Haltevorrichtung in geeigneter Weise leicht dadurch einstellbar, wie weit der Zugkörper durch die Aufnahme gezogen wird. Schließlich liegt ein aufwickelbarer Zugkörper beim Aufwickeln oder im aufgewickelten Zustand an einem Widerlager der Haltevorrichtung an und legt die Haltevorrichtung dadurch fest.

Beim Aufwickeln wird der Zugkörper nämlich derart reversibel oder irreversibel verbogen oder verformt, dass eine Aufweitung des Außen- und/ oder Innenumfangs der Haltevorrichtung nicht mehr möglich ist. Durch das Aufwickeln oder nach dem Aufwickeln bildet der Zugkörper nämlich erfindungsgemäß eine Rolle oder einen Wulst aus, der einerseits am Widerlager anliegt und andererseits aufgrund seiner Breite und Sperrigkeit nicht mehr durch die Ausnehmung zurückgleiten kann, um den Außen- und/ oder Innenumfang der Haltevorrichtung wieder aufzuweiten.

Beim Aufwickeln wird die Isolierung in radialer Richtung gegen den von der Haltevorrichtung umfangenen Körper, nämlich insbesondere gegen eine V-Band-Schelle, gepresst. Insoweit ist eine Haltevorrichtung zum Befestigen einer Isolierung angegeben, mit welcher eine Isolierung problemlos lagerichtig und stabil um eine V-Band-Schelle herum gelegt werden kann, welche zwei Rohrenden miteinander verbindet.

Der Zugkörper ist spiralförmig aufwickelbar oder aufgewickelt. Ein spiralförmiger Körper entsteht beim Ergreifen und Drehen eines Abschnitts des Zugkörpers um eine Drehachse. Das Ergreifen und Drehen kann von einer montierenden Person leicht mit Werkzeugen durchgeführt werden, die die Person üblicherweise mit sich führt.

Vor diesem Hintergrund könnte der Zugkörper händisch oder mittels eines Akkuschraubers spiralförmig aufwickelbar sein. Das händische Aufwickeln könnte unter Zuhilfenahme einer Zange erfolgen, wobei bei Verwendung eines Akkuschraubers oder einer Bohrmaschine der Aufwickelprozess relativ schnell durchführbar ist.

Der Zugkörper könnte als länglicher Streifen oder längliche Zunge oder streifenartig oder zungenartig ausgebildet sein. Aufgrund dieser Ausgestaltung ist der Zugkörper einerseits leicht ergreifbar und andererseits leicht deformierbar, insbesondere umbiegbar.

Das zweite Verschlusselement könnte als Haube ausgebildet sein, wobei in der Haube die Ausnehmung ausgebildet ist. Hierdurch weist die Haltevorrichtung einen teilearmen Aufbau auf.

Bevorzugt ist die Haltevorrichtung, aber insbesondere der Zugkörper, aus einem Metall, bevorzugt aus Edelstahl, gefertigt. Metalle lassen sich leicht reversibel oder irreversibel umbiegen. Edelstahl wird aufgrund seiner Korrosionsbeständigkeit besonders bevorzugt verwendet, um eine hier beschriebene Haltevorrichtung zu fertigen. Bevorzugt ist daher die gesamte Haltevorrichtung aus Edelstahl gefertigt. Die Haltevorrichtung ist bevorzugt einteilig ausgestaltet.

Der Zugkörper und/ oder das Material, aus dem der Gürtelabschnitt und/oder die gesamte Haltevorrichtung gefertigt ist, könnte bzw. könnten eine Dicke im Bereich 0,25 bis 1 mm aufweisen. Eine solche Dicke hat sich als vorteilhaft erwiesen, um einerseits den Zugkörper und den Gürtelabschnitt leicht umbiegen zu können und andererseits relativ leicht Stanz- oder Laserprozesse durchführen zu können, um im Gürtelabschnitt Strukturen ausbilden zu können.

Vor diesem Hintergrund könnte der Gürtelabschnitt eine Aufnahme zum Ein- oder Anlegen einer Isolierung aufweisen oder ausbilden, wobei der Gürtelabschnitt eine innere Anlagebasis aufweist, von welcher beidseitig Stützsegmente abragen, welche durch Aussparungen voneinander beabstandet sind. Die Aufnahme ist bevorzugt im Querschnitt im Wesentlichen U-förmig ausgebildet. Die Stützsegmente ragen derart von der Anlagebasis ab, dass ein Ausweichen der Isolierung in axialer Richtung erschwert oder verhindert ist. Die Anlagebasis ist bevorzugt als geschlossene Ebene ausgebildet, welche ein Ausweichen der Isolierung in radialer Richtung verhindert.

Mindestens zwei Stützsegmente könnten sich in Abragerichtung in ihrer Breite verjüngen, wobei sich eine zwischen diesen liegende Aussparung in Abragerichtung derart erweitert, dass sich die Stützsegmente beim Biegen des Gürtelabschnitts zur Verringerung des Außen- und/ oder Innenumfangs mit ihren Seitenkanten einander annähern können und sich die Aussparung dabei in ihrer Weite verringert. Hierdurch wird das Biegen des Gürtelabschnitts erleichtert. Die Stützsegmente stoßen beim Biegen vorzugsweise zunächst nicht aneinander an. Die Aussparungen begünstigen durch gezielte Materialschwächung das Biegeverhalten des Gürtelabschnitts. Die Aussparungen sind so ausgebildet, dass sich die Stützsegmente beim Biegen des Gürtelabschnitts möglichst nahe kommen und eine Abschirmung der Isolierung und der V-Band-Schelle in axialer Richtung begünstigen.

Vor diesem Hintergrund ist auch denkbar, dass sich die Stützsegmente nicht in einer Richtung verjüngen, aber die Aussparungen geeignet gewählt sind, damit sich die Stützsegmente beim Biegen des Gürtelabschnitts annähern oder sogar bereichsweise einander überlappen können.

Die Isolierung könnte zumindest an einer Stelle mit der Haltevorrichtung verbunden sein. Bevorzugt ist die Isolierung am zweiten Verschlusselement festgelegt. Hierdurch ist die Isolierung verliersicher mit der Haltevorrichtung verbunden. Die montierende Person kann die Isolierung in die Aufnahme einlegen und die Haltevorrichtung um eine V-Band-Schelle herumlegen. Die Isolierung könnte als Isolierformteil ausgebildet sein, wobei die Isolierung ein Glasfasergewebe oder ein Feindrahtgewebe aufweist.

Die beiden Verschlusselemente könnten in einer nicht zum Gegenstand der Erfindung gehörenden Ausführungsform durch eine Schraubverbindung miteinander verbindbar sein, wobei eine Schraube mit einem gewindetragenden Schraubenende in einer Schrauben-Gegenaufnahme aufgenommen ist und die Schraube zur Verringerung des Außen- und/ oder Innenumfangs der Haltevorrichtung in die Schrauben-Gegenaufnahme eindrehbar ist. Eine Schraubverbindung ist leicht wieder lösbar.

Die Schraube könnte mit ihrem gewindetragenden Schraubenende in einer drehbaren Schrauben-Gegenaufnahme aufgenommen oder verschwenkbar aufgenommen sein und mit einem freien Ende, welches einen Schraubenkopf aufweist, in ein Einhängelager eingehängt oder einhängbar sein. Hierdurch ist die Montage vereinfacht und die Schraube verliersicher an der Haltevorrichtung angebracht.

Die drehbare Schrauben-Gegenaufnahme könnte dem ersten Verschlusselement und/oder dem Gürtelabschnitt zugeordnet sein und das Einhängelager könnte dem zweiten Verschlusselement und/ oder der Haube zugeordnet sein. So kann eine längliche Schraube in Richtung des Gürtelabschnitts abragen. Ein Überragen der Haube durch die Schraube bzw. ein störendes Abstehen der Schraube kann vermieden werden.

Die Isolierung könnte eine Laminierung aufweisen, welche der Anlagebasis abgewandt und/ oder nach radial innen angeordnet ist. Die Laminierung kann hinter ihr liegendes Isoliermaterial vor Abrieb schützen.

Die Isolierung könnte bereichsweise durch einen Klebstoff mit der Haltevorrichtung verbunden sein. Ein Klebstoff kann kostengünstig und zur raschen Fertigung eingesetzt werden.

Ein Werkzeug könnte als isoliertes Ersatzteil zum Festlegen einer Haltevorrichtung der hier beschriebenen Art bereitgestellt werden. Das Werkzeug könnte ein Greifende mit einem einseitig offenen Schlitz umfassen, in welchen der Zugkörper einschiebbar ist, und ein Adapterende. Das Adapterende könnte als Vierkant, Sechskant oder in anderer Weise ausgebildet sein. Das Werkzeug könnte stiftförmig ausgebildet sein, damit der Zugkörper um das Werkzeug herumgewickelt werden kann. Das Adapterende des Stifts ist derart ausgebildet, dass es leicht von einem Futter eines Akkuschraubers, einer Bohrmaschine oder eines Schlüssels zum Drehen oder Rotieren ergriffen werden kann.

Mit einem solchen oder einem anderen Werkzeug ist ein Verfahren zum Befestigen einer Isolierung mittels einer Haltevorrichtung der hier beschriebenen Art in folgender Weise durchführbar: Ein erstes Ende der Haltevorrichtung, dem das erste Verschlusselement zugeordnet ist, und ein zweites Ende der Haltevorrichtung, dem das zweite Verschlusselement zugeordnet ist, werden miteinander verbunden, wobei der Gürtelabschnitt, welcher sich zwischen den Verschlusselementen erstreckt, gebogen wird, wobei die beiden Enden durch ein Zusammenwirken der Verschlusselemente verbunden werden, indem der Zugkörper des ersten Verschlusselements oder der Zugkörper als erstes Verschlusselement durch eine Ausnehmung des zweiten Verschlusselements gezogen wird, wobei der Zugkörper zur Verringerung des Außen- und/oder Innenumfangs der Haltevorrichtung und zu deren Festlegung aufgewickelt wird und wobei der Zugkörper beim Aufwickeln oder im aufgewickelten Zustand an einem Widerlager der Haltevorrichtung anliegt.

Die hier beschriebene Haltevorrichtung ist insbesondere zur Verwendung bei dynamisch belasteten Rohrverbindungen geeignet. Die Haltevorrichtung ist bevorzugt flexibel biegbar und aus Metall gefertigt.

In der Zeichnung zeigen
- Fig. 1: eine perspektivische Ansicht einer erfindungsgemäßen Haltevorrichtung zum Befestigen einer Isolierung, wobei die Haltevorrichtung noch nicht endgültig geschlossen ist, jedoch der Zugkörper zur provisorischen Verbindung der Verschlusselemente bereits durch die Ausnehmung eines zweiten Verschlusselements gezogen ist, welches als Haube ausgestaltet ist,
- Fig. 2: eine weitere perspektivische Ansicht der Haltevorrichtung gemäß Fig. 1, wobei eine Ansicht auf die Innenfläche des Zugkörpers dargestellt ist,
- Fig. 3: eine Seitenansicht der Haltevorrichtung gemäß Fig. 1 und 2,
- Fig. 4: eine Ansicht der Haltevorrichtung gemäß Fig. 1, wobei die Haltevorrichtung betriebstauglich geschlossen und der Zugkörper spiralförmig aufgewickelt ist,
- Fig. 5: auf der linken Seite eine Seitenansicht der Haltevorrichtung gemäß Fig. 1 in aufgerolltem Zustand und in einer Ebene liegend und auf der rechten Seite die schlitzförmige Ausnehmung des zweiten Verschlusselements in einer Draufsicht,
- Fig. 6: eine Ansicht der Haltevorrichtung gemäß Fig. 5 von unten,
- Fig. 7: eine Ansicht eines Rohlings, aus welchem die Haltevorrichtung gemäß Fig. 1 gefertigt wird,
- Fig. 8: auf der linken Seite ein Werkzeug zum Aufwickeln des Zugkörpers und auf der rechten Seite eine schematische Darstellung einer Anordnung, welche zwei Rohrenden umfasst, die durch eine V-Band-Schelle miteinander gasdicht verbunden sind, wobei die V-Band-Schelle von einer Isolierung umgeben ist, welche in einer Haltevorrichtung gemäß Fig. 4 aufgenommen ist, und wobei die Haltevorrichtung die V-Band-Schelle und die Isolierung sowohl in radialer als auch in axialer Richtung nach Art eines Außenmantels umfängt,
- Fig. 9: eine perspektivische Ansicht einer weiteren nicht erfindungsgemäßen Haltevorrichtung zum Befestigen einer Isolierung, wobei die Haltevorrichtung geschlossen ist und eine Schraubverbindung zum Verringern des Außen- und Innenumfangs aufweist und wobei das zweite Verschlusselement als Haube ausgestaltet ist,
- Fig. 10: eine perspektivische Ansicht einer weiteren nicht erfindungsgemäßen Haltevorrichtung, welche eine verschwenk- und einhängbare Schraube aufweist,
- Fig. 11: eine Seitenansicht der Haltevorrichtung gemäß Fig. 10,
- Fig. 12: eine Ansicht der Haltevorrichtung gemäß Fig. 10 und 11, wobei die Schraubverbindung dargestellt ist,
- Fig. 13: eine weitere Ansicht der Haltevorrichtung gemäß Fig. 12,
- Fig. 14: eine Seitenansicht der aufgerollten und nicht geschlossenen Haltevorrichtung gemäß Fig. 10 und
- Fig. 15: eine Schnittansicht einer zwischen den Seitenstegen eingelegten Isolierung.

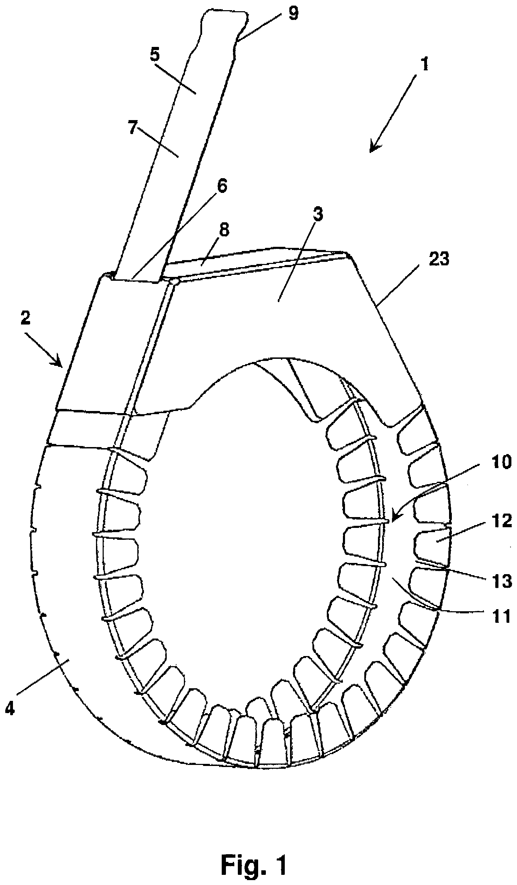

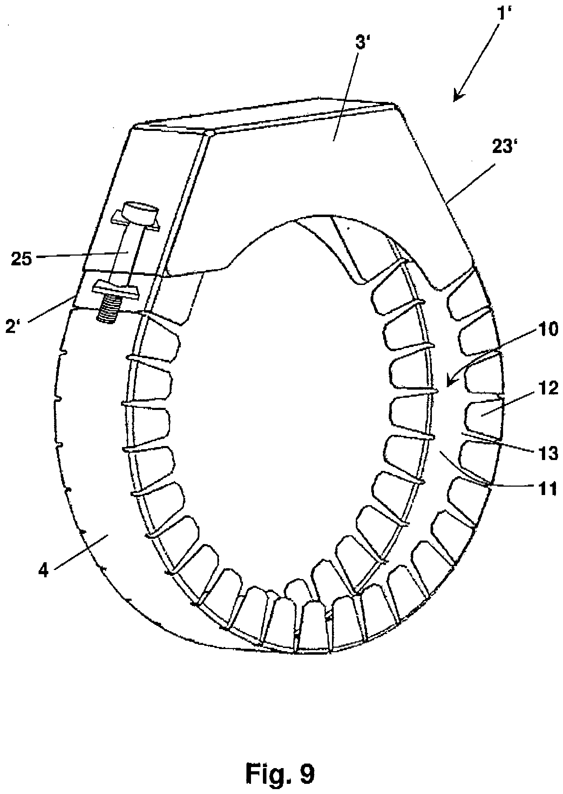

Die Fig. 1 und 9 zeigen jeweils eine Haltevorrichtung 1, 1' zum Befestigen einer Isolierung an einer V-Band-Schelle oder an einer anderen Verbindungsvorrichtung für zu verbindende Rohrenden, umfassend Verschlusselemente 2, 2', 3, 3', wobei durch Zusammenwirken der Verschlusselemente 2, 2', 3, 3' der Außen- und/ oder Innenumfang der Haltevorrichtung 1, 1' verringerbar ist. Beide Haltevorrichtungen 1, 1' umfassen einen biegbaren Gürtelabschnitt 4, der als Teil eines Außenmantels oder nach Art eines Außenmantels um eine Isolierung legbar ist. Der Gürtelabschnitt 4 ist mittelbar oder unmittelbar mit einer Haube 23, 23' zur Aufnahme eines Überstands oder Verschlusses einer V-Band-Schelle oder einer anderen Verbindungsvorrichtung für Rohrenden verbunden und/ oder verbindbar.

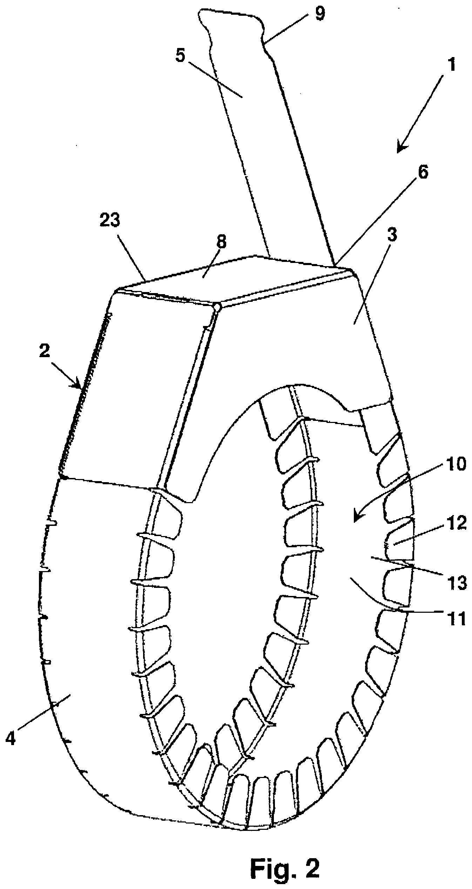

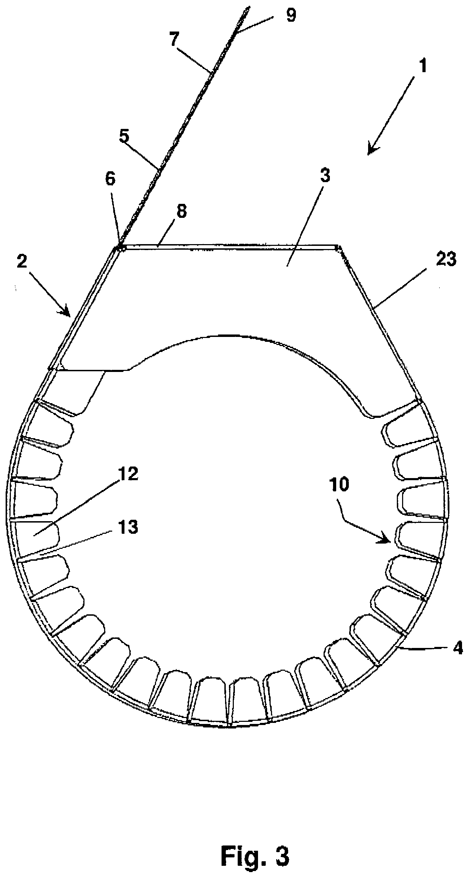

Die Fig. 1 bis 6 zeigen eine Haltevorrichtung 1, bei welcher die beiden Verschlusselemente 2, 3 miteinander verbindbar oder verbunden sind, wobei das erste Verschlusselement 2 einen Zugkörper 5 aufweist oder als solcher ausgebildet ist, wobei das zweite Verschlusselement 3 eine Ausnehmung 6 aufweist, durch welche der Zugkörper 5 zur Verringerung des Außen- und/ oder Innenumfangs der Haltevorrichtung 1 durchziehbar oder durchgezogen ist, und wobei der Zugkörper 5 aufwickelbar oder aufgewickelt ist und beim Aufwickeln oder im aufgewickelten Zustand an einem Widerlager 8 anliegt. Das zweite Verschlusselement 3 ist als Haube 23 ausgebildet, wobei in der Haube 23 die Ausnehmung 6 ausgebildet ist.

Die Fig. 1 bis 4 zeigen konkret eine Haltevorrichtung 1 zum Befestigen einer nicht gezeigten Isolierung, umfassend ein erstes Ende, dem ein erstes Verschlusselement 2 zugeordnet ist, ein zweites Ende, dem ein zweites Verschlusselement 3 zugeordnet ist, und einen biegbaren Gürtelabschnitt 4, welcher sich zwischen den Verschlusselementen 2, 3 erstreckt, wobei die beiden Enden durch ein Zusammenwirken der Verschlusselemente 2, 3 miteinander verbindbar oder verbunden sind, wobei das erste Verschlusselement 2 einen Zugkörper 5 aufweist und wobei das zweite Verschlusselement 3 eine Ausnehmung 6 aufweist, durch welche der Zugkörper 5 durchziehbar oder durchgezogen ist.

Die Fig. 1 bis 3 zeigen, dass der Zugkörper 5 aufwickelbar ist und seine Außenfläche 7 beim Aufwickeln an einem Widerlager 8 des zweiten Verschlusselements 3 anliegt. Insoweit ist der Zugkörper 5 aufwickelbar und liegt beim Aufwickeln an dem Widerlager 8 an und stützt sich an diesem ab.

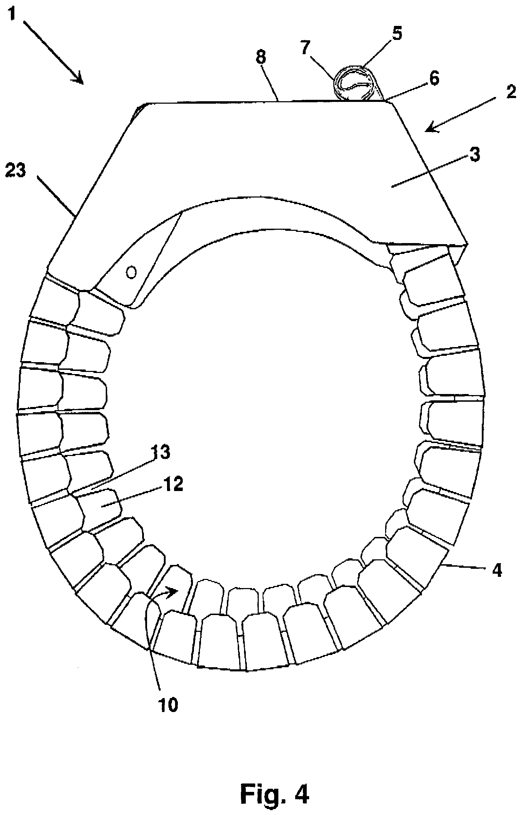

Fig. 4 zeigt, dass der Zugkörper 5 aufgewickelt ist und seine Außenfläche 7 im aufgewickelten Zustand an einem Widerlager 8 des zweiten Verschlusselements 3 anliegt. Insoweit ist der Zugkörper 5 aufgewickelt und liegt im aufgewickelten Zustand an dem Widerlager 8 an und stützt sich an diesem ab. Fig. 4 zeigt konkret, dass der Zugkörper 5 spiralförmig aufgewickelt ist.

Der Zugkörper 5 gemäß Fig. 1 bis 3 ist händisch oder mittels eines Akkuschraubers spiralförmig aufwickelbar und in den in Fig. 4 gezeigten Zustand verbringbar. Hierfür ist der Zugkörper 5 als länglicher Streifen oder längliche Zunge oder streifenartig oder zungenartig ausgebildet. An seinem freien Ende weist er eine Einschnürung 9 auf, die ein leichtes Ergreifen und Umbiegen bzw. Aufwickeln durch ein Werkzeug erlaubt. Der Zugkörper 5 und das Material, aus dem der Gürtelabschnitt 4 und die gesamte Haltevorrichtung 1 gefertigt sind, weisen eine Dicke von 0,5 mm auf.

Die Fig. 1 bis 5 zeigen, dass der Gürtelabschnitt 4 eine Aufnahme 10 zum Ein- oder Anlegen einer Isolierung aufweist und diese Aufnahme 10 ausbildet. Der Gürtelabschnitt 4 weist hierfür eine innere Anlagebasis 11 auf, von welcher beidseitig Stützsegmente 12 abragen, welche durch Aussparungen 13 voneinander beabstandet sind. Mindestens zwei Stützsegmente 12 verjüngen sich in Abragerichtung in ihrer Breite, wobei sich eine zwischen diesen liegende Aussparung 13 in Abragerichtung derart erweitert, dass sich die Stützsegmente 12 beim Biegen des Gürtelabschnitts 4 zur Verringerung des Außen- und/ oder Innenumfangs mit ihren Seitenkanten einander annähern können und sich die Aussparung 13 dabei in ihrer Weite verringert.

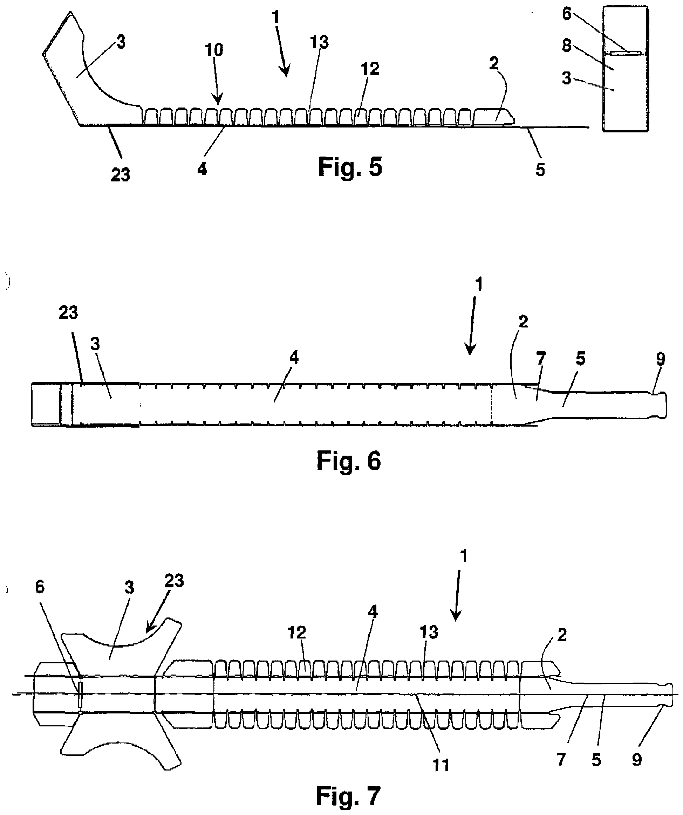

Die Stützsegmente 12 sind voneinander durch die Aussparungen 13 beabstandet. Die Stützsegmente 12 ragen von der Anlagebasis 11 ab, wobei sie mit dieser jeweils einen Winkel von 80 bis 100° einschließen. Dies ist in Fig. 5 besonders deutlich dargestellt. Mehrere benachbarte Stützsegmente 12 sind jeweils an gegenüberliegenden Längsseiten der Anlagebasis 11 palisadenartig angeordnet. Zwischen zwei benachbarten Stützsegmenten 12 ist jeweils eine Aussparung 13 in Form eines einseitig offenen, sich V-förmig erweiternden Schlitzes ausgebildet. Die Aussparungen 13 können durch Stanzprozesse oder einen Laser eingebracht werden.

Fig. 7 zeigt, dass die Haltevorrichtung 1 einstückig aus einer metallischen Lage ausgebildet ist. Die metallische Lage besteht aus Edelstahl. Die metallische Lage weist eine Dicke von 0,5 mm auf. Die in Fig. 7 links gezeigten abragenden Seitenelemente können aufgrund einer durchgängigen Kantung gebogen und durch Nietverbindungen zum zweiten Verschlusselement 3 bzw. zur Haube 23 verbunden werden. Die Stützsegmente 12 können ebenfalls aufgrund der Kantung zur Ausbildung einer Aufnahme 10 umgebogen werden. Das erste Verschlusselement 2 und der Zugkörper 5 sind einstückig ausgebildet und gehen ineinander über. Der Zugkörper 5 mündet in das erste Verschlusselement 2, indem sich die Breite des Zugkörpers 5 vergrößert. Hierdurch kann der Zugkörper 5 nur mit einer gewissen Länge durch die Ausnehmung 6 gezogen werden.

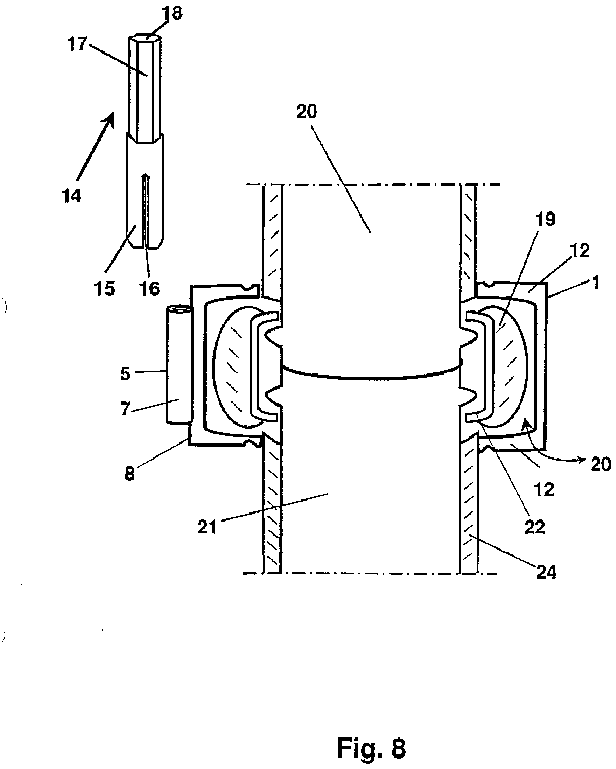

Fig. 8 zeigt in der linken Ansicht ein rotierbares stiftförmiges Werkzeug 14 zum Festlegen der Haltevorrichtung 1. Das Werkzeug 14 umfasst ein Greifende 15 mit einem einseitig offenen Schlitz 16, in welchen der Zugkörper 5 einschiebbar ist, und ein Adapterende 17, welches als Sechskant 18 ausgebildet ist. Das Greifende 15 dient dem Ergreifen und Aufwickeln des Zugkörpers 5. Das Adapterende 17 ist mit einem dreh- oder rotierbaren Futter verbindbar. Hierfür ist das Adapterende 17 mit einem Sechskant 18 versehen. Es ist jedoch auch denkbar, dass das Adapterende 17 anders ausgebildet ist, um gut von einem Werkzeug ergriffen werden zu können.

Mit dem zuvor beschriebenen Werkzeug 14 ist ein Verfahren zum Befestigen einer Isolierung 19 mittels der Haltevorrichtung 1 durchführbar, wobei das erste Ende der Haltevorrichtung 1, dem das erste Verschlusselement 2 zugeordnet ist, und das zweite Ende der Haltevorrichtung 1, dem das zweite Verschlusselement 3 zugeordnet ist, miteinander verbunden werden, wobei der Gürtelabschnitt 4, welcher sich zwischen den Verschlusselementen 2, 3 erstreckt, gebogen wird, wobei die beiden Enden durch ein Zusammenwirken der Verschlusselemente 2, 3 verbunden werden, indem der Zugkörper 5 des ersten Verschlusselements 2 durch die Ausnehmung 6 des zweiten Verschlusselements 3 gezogen wird, wobei der Zugkörper 5 zur Verringerung des Außen- und Innenumfangs der Haltevorrichtung 1 und zu deren Festlegung aufgewickelt wird und wobei seine Außenfläche 7 beim Aufwickeln oder im aufgewickelten Zustand an einem Widerlager 8 des zweiten Verschlusselements 3 anliegt. Das Aufwickeln erfolgt durch Drehen des Werkzeugs 14, dessen Schlitz 16 mit dem Zugkörper 5 in Eingriff ist.

Fig. 8 zeigt auf der rechten Seite in schematischer Ansicht eine Anordnung, umfassend zwei Rohrenden 20, 21, welche durch eine V-Band-Schelle 22 miteinander gasdicht und fest verbunden sind, wobei die V-Band-Schelle 22 von einer Isolierung 19 umfangen wird und wobei die Isolierung 19 in der Aufnahme 10 der Haltevorrichtung 1 aufgenommen ist. Die Haltevorrichtung 1 presst die Isolierung 19 radial gegen die V-Band-Schelle 22 und umfängt sowohl die V-Band-Schelle 22 als auch die Isolierung 19 in radialer und axialer Richtung nach Art eines Außenmantels. Die Isolierung 19 und die V-Band-Schelle 22 werden hierdurch vor Steinschlag geschützt, wenn die Anordnung beispielsweise an einem Unterboden eines Kraftfahrzeugs angeordnet ist.

Die Rohrenden 20, 21 sind jeweils zusätzlich noch durch einen Isoliermantel 24 isoliert, der jeweils innerhalb der Haltevorrichtung 1 endet, um eine nahezu vollständige Isoliertheit herzustellen. Die Isolierung 19 ist zumindest an einer Stelle mit der Haltevorrichtung 1 verbunden. Die Isolierung 19 ist am zweiten Verschlusselement 3 festgelegt.

Bei der hier konkret gezeigten Haltevorrichtung 1 ist nur ein Zugkörper 5 vorgesehen. Durch Aufwickeln eines einzigen Zugkörpers 5 kann die Montage schnell durchgeführt werden, Die Ausnehmung 6 im zweiten Verschlusselement 3 ist als an vier Seiten umgebener Schlitz ausgebildet. So kann der Zugkörper 5 nicht seitlich ausweichen. Der Schlitz bzw. die Ausnehmung 6 ist länglich ausgebildet. Der Schlitz bzw. die Ausnehmung 6 ist so schmal, dass der Zugkörper 5 mit geringem Spiel hindurchführbar ist. Hierdurch kann der Zugkörper 5 nicht mehr durch den Schlitz bzw. die Ausnehmung 6 zurückgleiten, auch wenn er nur geringfügig, das heißt mit nur wenigen Wicklungen, aufgewickelt ist.

Fig. 9 zeigt eine Haltevorrichtung 1', bei der kein Zugkörper, sondern eine Schraube 25 verwendet wird, um die Verschlusselemente 2', 3' miteinander zu verbinden. Das zweite Verschlusselement 3' ist als Haube 23' ausgebildet.

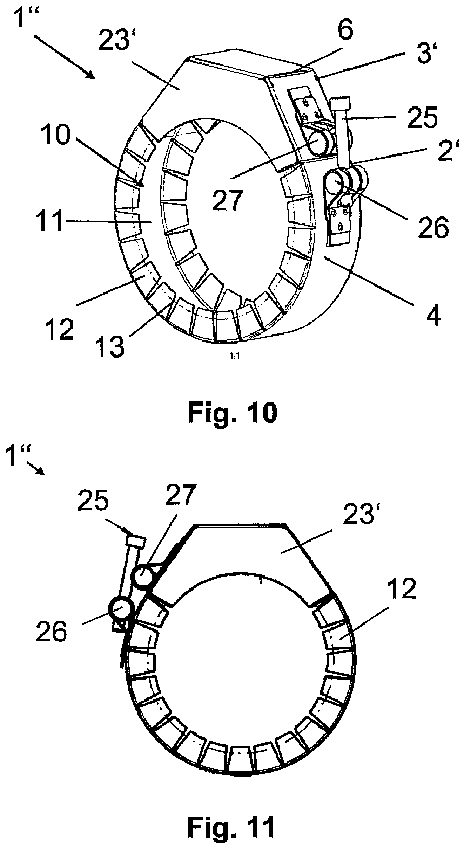

Fig. 10 bis 14 zeigen eine weitere Haltevorrichtung 1", bei welcher die beiden Verschlusselemente 2', 3' durch eine Schraubverbindung miteinander verbindbar sind.

Eine Schraube 25 ist mit einem gewindetragenden Schraubenende in einer Schrauben-Gegenaufnahme 26 aufgenommen, und die Schraube 25 ist zur Verringerung des Außen- und/ oder Innenumfangs der Haltevorrichtung 1" in die Schrauben-Gegenaufnahme 26 eindrehbar.

Die Schraube 25 ist mit ihrem gewindetragenden Schraubenende in einer drehbaren Schrauben-Gegenaufnahme 26 aufgenommen und verschwenkbar.

Die Schraube 25 ist mit einem freien Ende, welches einen Schraubenkopf aufweist, in ein Einhängelager 27 einhängbar. Nach dem Einhängen kann durch Eindrehen der Schraube 25 in die Schrauben-Gegenaufnahme 26 die Haltevorrichtung 1" gegen radial innenliegende Elemente angedrückt werden.

Die drehbare Schrauben-Gegenaufnahme 26 ist dem Gürtelabschnitt 4 zugeordnet, nämlich an diesem festgelegt. Das Einhängelager 27 ist der Haube 23' zugeordnet, nämlich an dieser festgelegt.

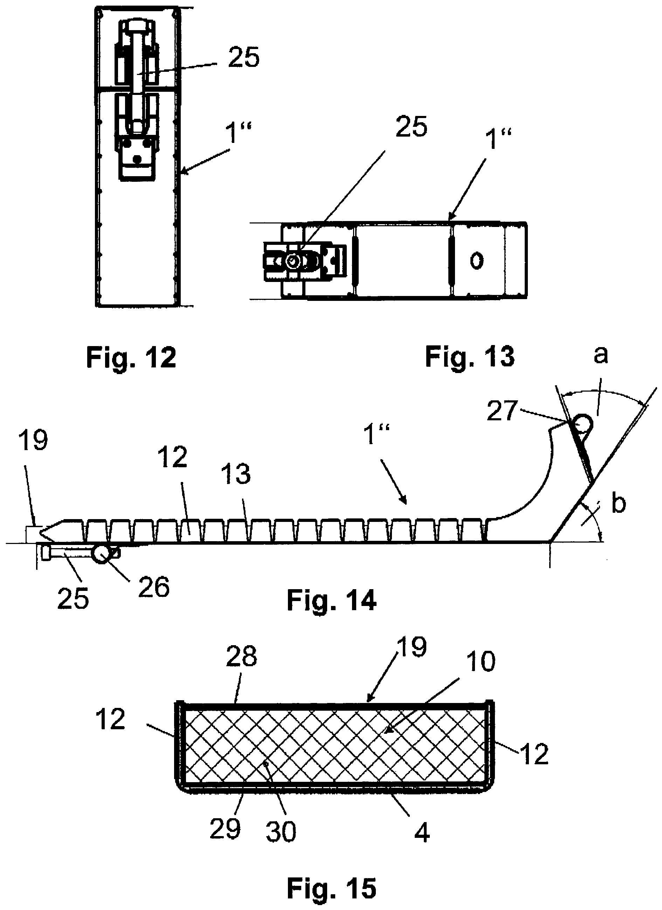

Fig. 14 zeigt die Haltevorrichtung 1" in aufgerolltem Zustand mit eingelegter Isolierung 19. Es sind mit Bezug auf Flächenneigungen der Haube 23' zwei Winkel a und b von jeweils 55° gezeigt.

Fig. 15 zeigt, dass die Isolierung 19 eine Laminierung 28 aufweist, welche der Anlagebasis 11 abgewandt und nach radial innen angeordnet ist. Die Laminierung 28 ist auf einem Isoliermaterial 30 aufgebracht. Die Isolierung 19 ist bereichsweise durch einen Klebstoff 29 mit der Haltevorrichtung 1" verbunden.

Die Haltevorrichtung 1" weist in ihrer Haube 23' eine Ausnehmung 6 auf, durch die ein Zugkörper 5 ziehbar wäre. Insoweit ist eine Kombination aus einer Schraubverbindung und einer Verbindung mittels des hier beschriebenen Zugkörpers 5 denkbar.

### Bezugszeichen

- 1, 1', 1": Haltevorrichtung
- 2, 2': erstes Verschlusselement
- 3, 3': zweites Verschlusselement
- 4: Gürtelabschnitt
- 5: Zugkörper
- 6: Ausnehmung
- 7: Außenfläche
- 8: Widerlager
- 9: Einschnürung
- 10: Aufnahme
- 11: Anlagebasis
- 12: Stützsegment
- 13: Aussparung
- 14: Werkzeug
- 15: Greifende
- 16: Schlitz
- 17: Adapterende
- 18: Sechskant
- 19: Isolierung
- 20, 21: Rohrende
- 22: V-Band-Schelle
- 23, 23': Haube
- 24: Isoliermantel
- 25: Schraube
- 26: Schrauben-Gegenaufnahme
- 27: Einhängelager
- 28: Laminierung
- 29: Klebstoff
- 30: Isoliermaterial

## Patentansprüche

1. Haltevorrichtung (1, 1', 1") zum Befestigen einer Isolierung (19) an einer V-Band-Schelle (22) oder an einer anderen Verbindungsvorrichtung für zu verbindende Rohrenden (20, 21), umfassend Verschlusselemente (2, 2', 3, 3'), wobei durch Zusammenwirken der Verschlusselemente (2, 2', 3, 3') der Außen- und/ oder Innenumfang der Haltevorrichtung (1, 1', 1") verringerbar ist, und umfassend einen biegbaren Gürtelabschnitt (4), wobei der Gürtelabschnitt (4) als Teil eines Außenmantels oder nach Art eines Außenmantels um eine Isolierung (19) legbar ist, wobei die Verschlusselemente (2, 3) miteinander verbindbar oder verbunden sind, wobei ein erstes Verschlusselement (2) einen Zugkörper (5) aufweist oder als solcher ausgebildet ist und wobei ein zweites Verschlusselement (3) eine Ausnehmung (6) aufweist, durch welche der Zugkörper (5) zur Verringerung des Außen- und/ oder Innenumfangs der Haltevorrichtung (1) durchziehbar oder durchgezogen ist,
**dadurch gekennzeichnet, dass** der Zugkörper (5) aufwickelbar oder aufgewickelt ist und beim Aufwickeln oder im aufgewickelten Zustand an einem Widerlager (8) anliegt und dass der Zugkörper (5) spiralförmig aufwickelbar oder aufgewickelt ist.

2. Haltevorrichtung nach Anspruch 1, **dadurch gekennzeichnet, dass** der Gürtelabschnitt (4) mittelbar oder unmittelbar mit einer Haube (23, 23') zur Aufnahme eines Überstands oder Verschlusses einer V-Band-Schelle (22) oder einer anderen Verbindungsvorrichtung für Rohrenden (20, 21) verbunden und/oder verbindbar ist.

3. Haltevorrichtung nach Anspruch 1 oder 2, **dadurch gekennzeichnet, dass** der Zugkörper (5) als länglicher Streifen oder längliche Zunge oder streifenartig oder zungenartig ausgebildet ist.

4. Haltevorrichtung nach einem der Ansprüche 1 bis 3, **dadurch gekennzeichnet, dass** das zweite Verschlusselement (3) als Haube (23) ausgebildet ist, wobei in der Haube (23) die Ausnehmung (6) ausgebildet ist.

5. Haltevorrichtung nach einem der voranstehenden Ansprüche, **dadurch gekennzeichnet, dass** der Gürtelabschnitt (4) eine Aufnahme (10) zum Ein- oder Anlegen einer Isolierung (19) aufweist oder ausbildet, wobei der Gürtelabschnitt (4) eine innere Anlagebasis (11) aufweist, von welcher beidseitig Stützsegmente (12) abragen, welche durch Aussparungen (13) voneinander beabstandet sind.

6. Haltevorrichtung nach Anspruch 5, **dadurch gekennzeichnet, dass** mindestens zwei Stützsegmente (12) sich in Abragerichtung in ihrer Breite verjüngen, wobei sich eine zwischen diesen liegende Aussparung (13) in Abragerichtung derart erweitert, dass sich die Stützsegmente (12) beim Biegen des Gürtelabschnitts (4) zur Verringerung des Außen- und/ oder Innenumfangs mit ihren Seitenkanten einander annähern können und sich die Aussparung (13) dabei in ihrer Weite verringert.

7. Haltevorrichtung nach einem der voranstehenden Ansprüche, **dadurch gekennzeichnet, dass** eine Isolierung (19) zumindest an einer Stelle mit der Haltevorrichtung (1, 1', 1") verbunden ist und/ oder dass eine Isolierung (19) am zweiten Verschlusselement (3, 3') festgelegt ist.

8. Haltevorrichtung nach einem der voranstehenden Ansprüche, **dadurch gekennzeichnet, dass** die beiden Verschlusselemente (2', 3') durch eine Schraubverbindung miteinander verbindbar sind, wobei eine Schraube (25) mit einem gewindetragenden Schraubenende in einer Schrauben-Gegenaufnahme (26) aufgenommen ist und die Schraube (25) zur Verringerung des Außen- und/ oder Innenumfangs der Haltevorrichtung (1', 1") in die Schrauben-Gegenaufnahme (26) eindrehbar ist.

9. Haltevorrichtung nach Anspruch 8, **dadurch gekennzeichnet, dass** die Schraube (25) mit ihrem Schraubenende in einer drehbaren Schrauben-Gegenaufnahme (26) aufgenommen oder verschwenkbar aufgenommen ist und mit einem freien Ende, welches einen Schraubenkopf aufweist, in ein Einhängelager (27) eingehängt oder einhängbar ist.

10. Haltevorrichtung nach Anspruch 9, **dadurch gekennzeichnet, dass** die drehbare Schrauben-Gegenaufnahme (26) dem ersten Verschlusselement (2') und/ oder dem Gürtelabschnitt (4) zugeordnet ist und dass das Einhängelager (27) dem zweiten Verschlusselement (3') und/ oder der Haube (23') zugeordnet ist.

11. Haltevorrichtung nach einem der voranstehenden Ansprüche, **dadurch gekennzeichnet, dass** die Isolierung (19) eine Laminierung (28) aufweist, welche der Anlagebasis (11) abgewandt und/ oder nach radial innen angeordnet ist.

12. Haltevorrichtung nach einem der voranstehenden Ansprüche, **dadurch gekennzeichnet, dass** die Isolierung (19) bereichsweise durch einen Klebstoff (29) mit der Haltevorrichtung (1 ") verbunden ist.

13. Verfahren zum Befestigen einer Isolierung (19) mittels einer Haltevorrichtung (1, 1', 1") nach dem Oberbegriff des Anspruchs 1 oder nach einem der Ansprüche 1 bis 12 umfassend die nachfolgenden Schritte:
- das erste Ende der Haltevorrichtung (1), dem das erste Verschlusselement (2) zugeordnet ist, und das zweite Ende der Haltevorrichtung (1), dem das zweite Verschlusselement (3) zugeordnet ist, werden miteinander verbunden,
- wobei der Gürtelabschnitt (4), welcher sich zwischen den Verschlusselementen (2, 3) erstreckt, gebogen wird,
- wobei die beiden Enden durch ein Zusammenwirken der Verschlusselemente (2, 3) verbunden werden, indem der Zugkörper (5) des ersten Verschlusselements (2) oder der Zugkörper (5) als erstes Verschlusselement (2) durch die Ausnehmung (6) des zweiten Verschlusselements (3) gezogen wird,
- wobei der Zugkörper (5) zur Verringerung des Außen- und/oder Innenumfangs der Haltevorrichtung (1) und zu deren Festlegung spiralförmig aufgewickelt wird und
- wobei der Zugkörper (5) beim Aufwickeln oder im aufgewickelten Zustand an einem Widerlager (8) der Haltevorrichtung (1) anliegt.

14. Verfahren nach Anspruch 13, **gekennzeichnet durch** eine Durchführung mit einem Werkzeug (14) zum Festlegen einer Haltevorrichtung (1) nach einem der Ansprüche 1 bis 12, umfassend ein Greifende (15) mit einem einseitig offenen Schlitz (16), in welchen der Zugkörper (5) einschiebbar ist, und ein Adapterende (17).

## Claims

1. Supporting device (1, 1', 1") for fastening an isolation (19) to a V-band clamp (22) or to another connection device for pipe ends (20, 21) to be connected, comprising locking elements (2, 2', 3, 3'), wherein through interaction of the locking elements (2, 2', 3, 3') the outer and/or inner circumference of the supporting device (1, 1', 1") is reducible, and comprising a bendable belt section (4), wherein the belt section (4) can be applied as part of the outer casing or in the form of an outer casing about an isolation (19), wherein the locking elements (2, 3) are connectable or connected to each other, wherein a first locking element (2) comprises an tensile element (5) or is designed as such and wherein a second locking element (3) comprises a cut-out (6) through which the tensile element (5) can be drawn or pulled in order to reduce the outer and/or inner circumference of the supporting device (1),
**characterised in that** the tensile element (5) can be wound up or is wound up and during winding up or in the wound-up state is in contact with an abutment (8) and **in that** the tensile element (5) can be or is wound up in a spiral fashion.

2. Supporting device according to claim 1 **characterised in that** the belt section (4) is directly or indirectly connected and/or is connectable to a hood (23, 23') for receiving an excess or closure of a V-band clamp (22) or another connection device for pipe ends (20, 21).

3. Supporting device according to claim 1 or 2 **characterised in that** the tensile element (5) is designed in a strip-like or tongue-like manner as an elongated strip or elongated tongue.

4. Supporting device according to any one of claims 1 to 3 **characterised in that** the second locking element (3) is embodied as a hood (23), wherein in the hood (23) the cut-out (6) is formed.

5. Supporting device according to any one of the preceding claims **characterised in that** the belt section (4) comprises or forms a holder (10) for inserting or applying an isolation (19) wherein the belt section (4) has an inner application base (11) from which support segments (12) project on both sides which through gaps (13) are distant from each other.

6. Supporting device according to claim 5 **characterised in that** at least two support segments (12) narrow in width in the direction of projection, wherein a gap (13) lying between these broadens in such a way that on bending the belt section (4) to reduce the outer and/or inner circumference, the support segments (12) can approach each other with their side edges and the gap (13) reduces in width.

7. Supporting device according to any one of the preceding claims **characterised in that** an isolation (19) is connected at at least one point with the supporting device (1, 1', 1") and/or **in that** an isolation (19) is fastened on the second locking element (3, 3').

8. Supporting device according to any one of the preceding claims **characterised in that** the two locking elements (2', 3') are connectable to each other by means of a screw connection, wherein a screw (25) with a threaded screw end is received in a screw counter-holder (26) and the screw (25) can be screwed into the screw counter-holder (26) to reduce the outer and/or inner circumference of the supporting device (1', 1").

9. Supporting device according to claim 8 **characterised in that** the screw (25) is held or pivotally held with its screw end in a rotatable screw counter-holder (26) and with a free end, which has a screw head, is suspended or suspendable in a hook-in bearing (27).

10. Supporting device according to claim 9 **characterised in that** the rotatable screw counter-holder (26) is assigned to the first locking element (2') and/or the belt section (4) and **in that** the hook-in bearing (27) is assigned to the second locking element (3') and/or the hood (23').

11. Supporting device according to any one of the preceding claims **characterised in that** the isolation (19) comprises lamination (28) which is arranged facing away from the application base (11) and/or radially inwards.

12. Supporting device according to any one of the preceding claims **characterised in that** isolation (19) is in sections connected to the supporting device (1") by an adhesive (29).

13. Method of fastening an isolation (19) by means of a supporting device (1, 1', 1") according to the introductory section of claim 1 or according to any one of claims 1 to 12 comprising the following steps:
- the first end of the supporting device (1), to which the first locking element (2) is assigned, and the second end of the supporting device (1), to which the second locking element (3) is assigned are connected to each other,
- wherein the belt section (4), which extends between the locking elements (2, 3), is bent,
- wherein the two ends are connected through interaction of the locking elements (2, 3) in that the tensile element (5) of the first locking element (2) or the tensile element (5) as the first locking element (2) is pulled through the cut-out (6) of the second locking element (3),
- wherein the tensile element (5) is wound up in a spiral fashion to reduce the outer and/or inner circumference of the supporting device (1) and to fasten it, and
- wherein the tensile element (5) during winding up or in the wound-up state is in contact with an abutment (8) of the supporting device (1).

14. Method according to claim 13 **characterised by** a duct with a tool (14) for fastening a supporting device (1) according to any one of claims 1 to 12 comprising a grip end (15) with a slit (16) open on one side into which the tensile element (5) can be inserted, and an adapter end (17).

## Revendications

1. Dispositif de retenue (1,1',1") destiné à fixer un isolant (19) sur un collier à bande en V (22) ou sur un autre dispositif de liaison pour des embouts de tube (20, 21) à assembler, comprenant des éléments de fermeture (2, 2', 3, 3'), sachant que par action conjointe des éléments de fermeture (2, 2', 3, 3'), la périphérie extérieure et/ou intérieure du dispositif de retenue (1, 1', 1") peut être réduit, et comprenant une section de ceinture (4) flexible, sachant que la section de ceinture (4) peut être posée en tant que partie d'une enveloppe extérieure ou à la manière d'une enveloppe extérieure autour d'un isolant (19), sachant que les éléments de fermeture (2, 3) peuvent être reliés ou sont reliés les uns aux autres,
sachant qu'un premier élément de fermeture (2) comporte un corps de traction (5) ou est constitué comme tel et sachant qu'un deuxième élément de fermeture (3) comporte un évidement (6) à travers lequel le corps de traction (5) peut être passé ou est passé pour réduire la périphérie extérieure et/ou intérieure du dispositif de retenue (1),
**caractérisé en ce que** le corps de traction (5) peut être enroulé ou est enroulé et vient s'appliquer lors de l'enroulement ou à l'état enroulé sur une butée (8) et **en ce que** le corps de traction (5) peut être enroulé ou est enroulé en forme de spirale.

2. Dispositif de retenue selon la revendication 1, **caractérisé en ce que** la section de ceinture (4) est reliée et/ou peut être reliée indirectement ou directement à une calotte (23, 23') pour loger une saillie ou fermeture d'un collier à bande en V (22) ou d'un autre dispositif de liaison pour les embouts de tube (20, 21).

3. Dispositif de retenue selon la revendication 1 ou 2, **caractérisé en ce que** le corps de traction (5) est constitué comme une bande longitudinale ou languette longitudinale ou en forme de bande ou de languette.

4. Dispositif de retenue selon l'une quelconque des revendications 1 à 3, **caractérisé en ce que** le deuxième élément de fermeture (3) est constitué comme une calotte (23), sachant que l'évidement (6) est constitué dans la calotte (23).

5. Dispositif de retenue selon l'une quelconque des revendications précédentes, **caractérisé en ce que** la section de ceinture (4) comporte ou constitue un logement (10) pour l'insertion ou la pose d'un isolant (19), sachant que la section de ceinture (4) comporte une base d'appui intérieure (11) de laquelle dépassent des deux côtés des segments de soutien (12), lesquels sont à distance les uns des autres par des évidements (13) à distances les unes des autres.

6. Dispositif de retenue selon la revendication 5, **caractérisé en ce qu'**au moins deux segments de soutien (12) diminuent dans leur largeur dans la direction de dépassement, sachant qu'un évidement (13) situé entre ceux-ci s'élargit en direction de dépassement de telle manière que les segments de soutien (12) peuvent se rapprocher les uns des autres avec leurs bords latéraux à la flexion de la section de ceinture (4) pour réduire la périphérie extérieure et/ou intérieure et de ce fait l'évidement (13) se réduit dans sa largeur.

7. Dispositif de retenue selon l'une quelconque des revendications précédentes, **caractérisé en ce qu'**un isolant (19) est relié au moins sur un côté au dispositif de retenue (1, 1', 1") et/ou **en ce qu'**un isolant (19) est fixé sur le deuxième élément de fermeture (3, 3').

8. Dispositif de retenue selon l'une quelconque des revendications précédentes, **caractérisé en ce que** les deux éléments de fermeture (2', 3') peuvent être reliés l'un à l'autre par une liaison à vis, sachant qu'une vis (25) avec un embout de vis portant un filetage est logée dans un logement opposé à vis (26) et la vis (25) peut être vissée pour réduire la périphérie extérieure et/ou intérieure du dispositif de retenue (1', 1") dans le logement opposé à vis (26).

9. Dispositif de retenue selon la revendication 8, **caractérisé en ce que** la vis (25) avec son embout de vis est logée dans un logement opposé à vis (26) pouvant tourner ou est logée pouvant pivoter et est accrochée ou peut être accrochée dans un support d'accrochage (27) avec une extrémité libre, laquelle comporte une tête de vis.

10. Dispositif de retenue selon la revendication 9, **caractérisé en ce que** le logement opposé à vis (26) pouvant tourner est attribué au premier élément de fermeture (2') et/ou à la section de ceinture (4) et **en ce que** le support d'accrochage (27) est attribué au deuxième élément de fermeture (3') et/ou à la calotte (23').

11. Dispositif de retenue selon l'une quelconque des revendications précédentes, **caractérisé en ce que** l'isolant (19) comporte un laminage (28), lequel est disposé opposé à la base d'appui (11) et/ou radialement vers l'intérieur.

12. Dispositif de retenue selon l'une quelconque des revendications précédentes, **caractérisé en ce que** l'isolant (19) est relié par zone par un adhésif (29) au dispositif de retenue (1").

13. Procédé de fixation d'un isolant (19) au moyen d'un dispositif de retenue (1, 1', 1") selon le préambule de la revendication 1 ou selon l'une quelconque des revendications 1 à 12 comprenant les étapes suivantes :
- la première extrémité du dispositif de retenue (1) à laquelle est attribué le premier élément de fermeture (2) et la deuxième extrémité du dispositif de retenue (1) à laquelle est attribué le deuxième élément de fermeture (3), sont reliées l'une à l'autre,
- sachant que la section de ceinture (4), laquelle s'étend entre les éléments de fermeture (2, 3), est cintrée,
- sachant que les deux extrémités sont reliées par une action conjointe des éléments de fermeture (2, 3), le corps de traction (5) du premier élément de fermeture (2) ou le corps de traction (5) en tant que premier élément de fermeture (2) étant tiré à travers l'évidement (6) du deuxième élément de fermeture (3),
- sachant que le corps de traction (5) est enroulé en forme de spirale pour réduire la périphérie extérieure et/ou intérieure du dispositif de retenue (1) et pour la fixation de celui-ci, et
- sachant que le corps de traction (5) vient s'appliquer lors de l'enroulement ou à l'état enroulé sur une butée (8) du dispositif de retenue (1).

14. Procédé selon la revendication 13, **caractérisé par** un passage avec un outil (14) pour fixer un dispositif de retenue (1) selon l'une quelconque des revendications 1 à 12, comprenant une extrémité d'engagement (15) avec une fente (16) ouverte unilatéralement dans laquelle le corps de traction (5) peut être rentré, et une extrémité d'adaptation (17).
